# EUROPÄISCHE PATENTANMELDUNG

(11) **EP 1 219 361 A2**
(43) Veröffentlichungstag der Anmeldung: **03.07.2002**
(21) Anmeldenummer: 01130648.7
(22) Anmeldetag: 20.12.2001
(51) Int. Cl.: B09B 1/00, B09C 1/10

(54) **Verfahren zur Behandlung von Mülldeponien durch Eintrag eines sauerstoffhaltigen Gases**

(30) Priorität: 21.12.2000 DE 10064011
(71) Anmelder: Linde Aktiengesellschaft, 65189 Wiesbaden (DE)
(72) Erfinder: Bürkli, Markus, 6006 Luzern (CH); Ziemann, Georg, 6048 Horw (CH)
(74) Vertreter: Gellner, Bernd, Dr.

(57) **Zusammenfassung**

Die Erfindung betrifft ein Verfahren zur Behandlung von Mülldeponien durch Eintrag eines sauerstoffhaltigen Gases, dadurch gekennzeichnet, dass ein einen höheren Sauerstoffgehalt als Luft aufweisendes Gas über in der Mülldeponie vorhandene Ver- und/oder Entsorgungseinrichtungen in die Mülldeponie eingetragen wird.

Als für den Gaseintrag geeignete bereits vorhandene Einrichtungen in Mülldeponien sind bevorzugt Einrichtungen zur aktiven und/oder passiven Deponieentgasung, zur Sickerwasserkreislaufführung oder zur Deponiebe- und/oder entwässerung zu sehen. Durch die Nutzung vorhandener Einrichtungen können die Kosten für die Nachsorge einer Mülldeponie vorteilhaft gesenkt werden.

## Beschreibung

Die Erfindung betrifft ein Verfahren zur Behandlung von Mülldeponien durch Eintrag eines sauerstoffhaltigen Gases.

Mülldeponien, insbesondere Hausmülldeponien, welche üblicherweise abgedeckt und geschlossen sind, müssen nachgesorgt werden, damit die Abgabe chemischer Produkte, die sich im Sickerwasser und in der Abluft wiederfinden, kontrolliert werden kann und dabei auftretende Schadstoffe vernichtet werden können. Diese Nachsorge muss meist über einen sehr langen Zeitraum betrieben werden und ist sehr kostenintensiv.

Nach dem Stand der Technik wird das Sickerwasser gefasst und je nach Belastung mittels biologischer, physikalischer oder chemischer Verfahren oder deren Kombinationen behandelt. Die entstehenden Gase werden abgesaugt und verbrannt oder über einen Biofilter geleitet.

Für den Fall, dass eine Deponie umgelagert werden muss, wird gelegentlich das sog. Biopusterverfahren gemäß der EP 0 489 705 B1 vorgeschlagen, bei dem von oben mittels Lanzen Sauerstoff oder sauerstoffangereicherte Luft intermittierend unter hohem Druck schlagartig in die Deponie eingetragen wird, um die oberste Schicht aerob umzustellen, damit ein geruchsminimierter Abbau möglich wird.

Es ist außerdem bekannt, Deponien in-situ mit Luft oder Sauerstoff zu begasen, wobei jedoch eine Bodenabsaugung über Bohrungen und/oder Schächte für eine Durchlüftung der Deponie sorgen muss.

Des Weiteren ist für Hügel-Deponien gemäß der DE 199 59 635 A1 bekannt sauerstoffhaltiges Gas mittels einer Vielzahl von zu diesem Zweck am Fuß der Mülldeponie angebrachten Lanzen in die Mülldeponie einzutragen.

Die bisherigen Verfahren zur Nachsorge von Mülldeponien sind meist technisch sehr aufwendig und erfordern hohe Investitionskosten. Beispielsweise macht eine Absaugung von Gasen teure Bohrungen notwendig. Ein Abtragen der Deponie ist nur mit aufwendiger Technik möglich. Darüber hinaus sind für eine Umlagerung der Mülldeponie andere Ablageplätze erforderlich. Auch der Einsatz einer Vielzahl von Sauerstofflanzen ist mit Kosten verbunden.

Der vorliegenden Erfindung liegt die Aufgabe zugrunde, ein Verfahren zur Behandlung von Mülldeponien zur Verfügung zu stellen, das eine erhebliche Verkürzung der Nachsorgezeit ohne Umlagerung der Deponie und auf kostengünstige Weise ermöglicht.

Diese Aufgabe wird erfindungsgemäß dadurch gelöst, dass ein einen höheren Sauerstoffgehalt als Luft aufweisendes Gas über in der Mülldeponie vorhandene Verund/oder Entsorgungseinrichtungen in die Mülldeponie eingetragen wird.

Ziel der Erfindung ist eine Umstellung des biologischen Abbauvorganges. Während der Errichtung der Mülldeponie beginnt zunächst ein kurzzeitiger aerober Abbau, anschließend läuft in den abgedeckten, unteren Schichten der Mülldeponie ein anaerober Abbau ab, der im wesentlichen Methan produziert, was viele Deponien zur Energieerzeugung nutzen. Danach bleiben aber noch Schadstoffreste übrig, die biologisch anaerob nicht abgebaut werden können. Hier müsste noch einmal eine aerobe Phase anschließen, die aber bisher nicht in einer Deponie aufgebaut werden konnte. Mit der vorliegenden Erfindung wird nun diese dritte Phase, die aerobe Phase, durch Eintrag eines einen höheren Sauerstoffgehalt als Luft aufweisenden Gases in der Mülldeponie aufgebaut.

Wesentlich ist dabei, dass keine separaten Einrichtungen zum Eintrag des sauerstoffhaltigen Gases errichtet werden müssen und keine aufwendigen Bohrungen und Schächte nötig sind, sowie auf eine Vielzahl von Sauerstofflanzen verzichtet werden kann. Der Sauerstoff wird erfindungsgemäß über in der Mülldeponie bereits vorhandene Ver- und/oder Entsorgungseinrichtungen dem Deponiekörper zugeführt. Diese Einrichtungen sind in der Regel so in der Mülldeponie positioniert, dass der Deponiekörper im wesentlichen horizontal vom Gas durchströmt wird, wobei die aerobe Biologie in der Mülldeponie mit Sauerstoff versorgt wird.

Im Gegensatz zum Stand der Technik, bei dem eine Durchströmung des Deponiekörpers entweder durch eine Gasabsaugung oder durch das Anbringen einer Vielzahl von Sauerstofflanzen erreicht werden kann, wird beim erfindungsgemäßen Verfahren vorteilhaft auf in jedem Fall in einer Mülldeponie vorhandene Einrichtungen zurückgegriffen. Dadurch werden die Kosten für das Verfahren gering gehalten. Der Gaseintrag in den Deponiekörper über bereits vorhandene Ver- und/oder Entsorgungseinrichtungen führt dazu, dass die gesamte Mülldeponie von dem Gas durchströmt werden kann.

Es ist davon auszugehen, dass schadstoffabbauende Mikroorganismen in der Mülldeponie vorhanden sind, die bisher mangels Sauerstoff nur nicht aktiv werden konnten. Durch die erfindungsgemäße Durchströmung der Mülldeponie mit einem sauerstoffhaltigen Gas, das einen höheren Sauerstoffgehalt als Luft aufweist, werden die Mikroorganismen derart angeregt, dass ein effizienter Schadstoffabbau erfolgt.

Als sauerstoffhaltiges Gas wird bevorzugt technisch reiner Sauerstoff verwendet. Bei Einsatz von technisch reinem Sauerstoff kann mit einem wesentlich schnelleren Abbau der Schadstoffe gerechnet werden als bei Verwendung von Luft.

Bevorzugt wird das Gas über in der Mülldeponie vorhandene Einrichtungen zur aktiven und/oder passiven Deponieentgasung in die Mülldeponie eingetragen. Diese Einrichtungen sind für einen hohen Gasdurchsatz ausgelegt und können daher problemlos für diesen Zweck verwendet werden.

Gemäß einer besonders bevorzugten Ausführungsform der Erfindung wird das Gas über in der Mülldeponie vorhandene Einrichtungen zur Sickerwasserkreislaufführung in die Mülldeponie eingetragen. Diese Ausführungsform gewährleistet eine sehr gleichmäßige Verteilung des zugeführten Gases in der Mülldeponie.

Besonders vorteilhaft wird das Gas über in der Mülldeponie vorhandene Einrichtungen zur Deponiebe- und/oder entwässerung in die Mülldeponie eingetragen. Die Deponiebe- und/oder entwässerung kann für die Zeit des Gaseintrags ohne Probleme zumindest in Teilbereichen der Mülldeponie unterbrochen werden.

Gemäß einer Weiterbildung der Erfindung wird das Gas zusätzlich zum Eintrag über in der Mülldeponie vorhandene Einrichtungen mittels in die Mülldeponie eingebrachter Lanzen in die Mülldeponie eingebracht, wodurch die Verteilung des sauerstoffhaltigen Gases optimiert werden kann.

Mit besonderem Vorteil wird das Gas über die Lanzen horizontal gerichtet in die Mülldeponie eingetragen. Zweckgemäß werden die Lanzen seitlich, vorzugsweise am Fuße der Mülldeponie in die Mülldeponie eingebracht. Auf diese Weise wird gewährleistet, dass bei im wesentlichen horizontaler Durchströmung der Mülldeponie und Überlagerung einer aufwärts gerichteten Strömung aufgrund des Auftriebes der gesamte Deponiekörper mit dem sauerstoffhaltigen Gas durchströmt werden kann.

Bevorzugt wird das sauerstoffhaltige Gas kontinuierlich der Mülldeponie zugeführt. Durch kontinuierliche Zufuhr des sauerstoffhaltigen Gases kann ein ununterbrochener Schadstoffabbau über längere Zeit gewährleistet werden. Besonders bevorzugt wird das sauerstoffhaltige Gas mit einem Druck von ca. 1,5 bis ca. 4 bar der Mülldeponie zugeführt. Als Lanzen für den Eintrag des sauerstoffhaltigen Gases werden zweckmäßigerweise Rohre mit einem Durchmesser von ca. 25 bis ca. 35 mm eingesetzt.

Gemäß einer vorteilhaften Weiterbildung der Erfindung werden der Mülldeponie zusätzlich Nährstoffe für schadstoffabbauende Mikroorganismen zugeführt. Gemäß einer besonders vorteilhaften Weiterbildung der Erfindung werden der Mülldeponie zusätzlich an die abzubauenden Schadstoffe angepasste Mikroorganismen zugeführt. Dadurch kann eine weitere Steigerung des Schadstoffabbaus erreicht werden.

Um eine möglichst gleichmäßige Versorgung des gesamten Deponiekörpers zu erreichen, werden als Lanzen bevorzugt Rohre mit einem Durchmesser von ca. 25 bis ca. 35 mm verwendet werden. Des Weiteren werden die Lanzen vorteilhaft ca. 1 bis ca. 2 Meter tief in die Mülldeponie eingebracht. Zweckmäßig werden mehrere Lanzen verwendet, die in Abständen von ca. 2 bis ca. 5 Meter voneinander in die Mülldeponie eingebracht werden.

Die Erfindung bietet den Vorteil, dass eine gleichmäßige Verteilung des zugeführten sauerstoffhaltigen Gases in der Mülldeponie unabhängig von der Form der Mülldeponie möglich ist. Beispielsweise eignet sich die Erfindung hervorragend für Mülldeponien in Gruben und Senken oder in V-Tälern, da diese über die vorhandenen Einrichtung zur Ver- und/oder Entsorgung der Mülldeponie sehr gut mit dem sauerstoffhaltigen Gas versorgt werden können. Unter den vorhandenen Einrichtung zur Ver- und/oder Entsorgung sind in erster Linie Einrichtungen für den Umgang mit den in der Deponie sich bildenden Gasen und mit dem Sickerwasser zu verstehen. Die vorhandene Leitungssysteme und Gasbrunnen sind in der Regel weiträumig angelegt, wodurch eine weitreichende Verteilung des zugeführten sauerstoffhaltigen Gases erreichbar ist.

Durch die Nutzung vorhandener Einrichtungen können die Kosten für die Nachsorge einer Mülldeponie vorteilhaft gesenkt werden. Das erfindungsgemäße Verfahren verursacht keine oder nur geringe Investitionskosten und kann bereits nach kurzer Installationszeit in einer Mülldeponie eingesetzt werden.

## Patentansprüche

1. Verfahren zur Behandlung von Mülldeponien durch Eintrag eines sauerstoffhaltigen Gases, **dadurch gekennzeichnet, dass** ein einen höheren Sauerstoffgehalt als Luft aufweisendes Gas über in der Mülldeponie vorhandene Ver- und/oder Entsorgungseinrichtungen in die Mülldeponie eingetragen wird.

2. Verfahren nach Anspruch 1, **dadurch gekennzeichnet, dass** als sauerstoffhaltiges Gas technisch reiner Sauerstoff verwendet wird.

3. Verfahren nach Anspruch 1 oder 2, **dadurch gekennzeichnet, dass** das Gas über in der Mülldeponie vorhandene Einrichtungen zur aktiven und/oder passiven Deponieentgasung in die Mülldeponie eingetragen wird.

4. Verfahren nach einem der Ansprüche 1 bis 3, **dadurch gekennzeichnet, dass** das Gas über in der Mülldeponie vorhandene Einrichtungen zur Sickerwasserkreislaufführung in die Mülldeponie eingetragen wird.

5. Verfahren nach einem der Ansprüche 1 bis 4, **dadurch gekennzeichnet, dass** das Gas über in der Mülldeponie vorhandene Einrichtungen zur Deponiebe- und/oder entwässerung in die Mülldeponie eingetragen wird.

6. Verfahren nach einem der Ansprüche 1 bis 5, **dadurch gekennzeichnet, dass** das Gas zusätzlich zum Eintrag über in der Mülldeponie vorhandene Einrichtungen mittels in die Mülldeponie eingebrachter Lanzen in die Mülldeponie eingebracht wird.

7. Verfahren nach Anspruch 6, **dadurch gekennzeichnet, dass** das Gas über die Lanzen horizontal gerichtet in die Mülldeponie eingetragen wird.

8. Verfahren nach Anspruch 6 oder 7, **dadurch gekennzeichnet, dass** die Lanzen seitlich, vorzugsweise am Fuße der Mülldeponie in die Mülldeponie eingebracht werden.

9. Verfahren nach einem der Ansprüche 1 bis 8, **dadurch gekennzeichnet, dass** das sauerstoffhaltige Gas kontinuierlich der Mülldeponie zugeführt wird.

10. Verfahren nach einem der Ansprüche 1 bis 9, **dadurch gekennzeichnet, dass** das sauerstoffhaltige Gas mit einem Druck von ca. 1,5 bis ca. 4 bar der Mülldeponie zugeführt wird.

11. Verfahren nach einem der Ansprüche 1 bis 10, **dadurch gekennzeichnet, dass** der Mülldeponie zusätzlich Nährstoffe für schadstoffabbauende Mikroorganismen zugeführt werden.

12. Verfahren nach einem der Ansprüche 1 bis 11, **dadurch gekennzeichnet, dass** der Mülldeponie zusätzlich an die abzubauenden Schadstoffe angepasste Mikroorganismen zugeführt werden.
